# FASCICULE DE BREVET EUROPEEN

(11) **EP 1 429 277 B1**
(45) Date de publication et mention de la délivrance du brevet: **26.08.2009**
(21) Numéro de dépôt: 03293110.7
(22) Date de dépôt: 11.12.2003
(51) Int. Cl.: G06K 7/08, G06K 7/10

(54) **Vetement identificateur d'objets à trier**
Identifizierungsverkleidung für zu sortierende Gegenstände
Garment for identification of objects to be sorted

(30) Priorité: 13.12.2002 FR 0215798
(43) Date de publication de la demande: 16.06.2004
(73) Titulaire: NEOPOST TECHNOLOGIES, 92220 Bagneux (FR)
(72) Inventeur: Fabre, Bruno, 84300 Cavaillon (FR); Venture, Guy, 13560 Senas (FR)
(74) Mandataire: David, Alain

(56) Documents cités:
- WO-A-01/45038
- DE-A- 19 530 391
- PATENT ABSTRACTS OF JAPAN vol. 2003, no. 04, 2 avril 2003 (2003-04-02) & JP 2002 352200 A (DAINIPPON PRINTING CO LTD), 6 décembre 2002 (2002-12-06)

## Description

### Domaine de l'invention

La présente invention se rapporte au domaine de la logistique et du tri d'objets divers et elle concerne plus particulièrement la localisation, l'identification et la collecte d'objets stockés en vrac dans des magasins généraux, entrepôts ou ateliers, préalablement à leur traitement.

### Art antérieur

La localisation d'objets disposés eh vrac dans des aires d'entreposage posent de nombreux problèmes, notamment lorsqu'il s'agit d'effectuer celle-ci rapidement et sans erreurs.

Une solution connue consiste à munir ces objets d'un code à barres et de confier à chacun des manutentionnaires chargés de la collecte de ces objets un dispositif de lecture portable.

Malheureusement, une telle solution, outre qu'elle est souvent source d'erreurs de lecture, s'avère peu efficace quant il s'agit de retrouver le paquet recherché parmi un amoncellement de colis stockés en vrac, car il nécessite le passage en revue de chaque colis pour effectuer la lecture du code à barres qui est en général imprimé sur une seule face ou à un endroit déterminé du colis qu'il convient alors aussi de rechercher.

C'est pourquoi, actuellement, on a plus souvent recours à des solutions faisant appel au marquage électronique de type RFID (radio frequency identity device). De telles solutions sont décrites dans les documents DE 19530391 A1 et WO 01/45038 A2. Ces solutions, outre qu'elles présentent une plus grande durée de vie et une plus grande capacité de mise à jour du marquage, évitent d'avoir à retourner les colis, car les dispositifs de lecture, dits aussi interrogateurs RFID, ne nécessitent pas un positionnement particulier du marquage électronique par rapport à l'antenne de détection de l'interrogateur RFID au contraire des lecteurs de codes à barres qui impliquent une disposition en face à face.

Malheureusement, ces dispositifs souffrent encore d'inconvénients importants. En effet, il s'avère qu'en pratique, du fait de leur portée relativement importante et de leur couverture large, il est particulièrement délicat pour un manutentionnaire de retrouver un article doté d'un marquage électronique déterminé correspondant à un critère de tri recherché parmi une quantité d'autres articles également marqués, disposés en vrac cote à cote sur une aire d'entreposage par exemple, et entrant alors tous dans le champ de lecture d'un même interrogateur RFID.

### Objet et définition de l'invention

La présente invention a pour objet de pallier ces inconvénients en proposant un système à la fois simple et économique de localisation et d'identification automatique d'objets.

Ces buts sont atteints par un procédé selon la revendication 1 et un vêtement-antenne selon la revendication 9.

Ainsi, un manutentionnaire muni de ce vêtement-antenne identificateur d'objets pourra très rapidement localiser et appréhender l'objet recherché, notamment lorsque celui-ci se trouve dans une pile d'objets disposés en vrac, ce qui n'aurait pas été possible avec les dispositifs de lecture traditionnelle du fait de leur peu de sélectivité.

Selon le mode de réalisation envisagé, l'antenne radio-fréquence peut comporter deux bobinages à plat tissés soit sur les manchettes du vêtement soit sur deux gants enfilés par le manutentionnaire, les câbles de liaison au module électronique étant disposés dans ce dernier cas dans une gaine passée sous le vêtement du manutentionnaire.

Le module électronique comporte des moyens de comparaison pour comparer les informations d'identification obtenues des transpondeurs avec des références relatives aux objets à identifier et ainsi valider au fur et à mesure de leur collecte les objets relevés par le manutentionnaire et des moyens mémoire pour stocker lesdites références relatives aux objets à identifier.

De préférence, le module électronique comporte des moyens d'indication visuelle et/ou sonore pour informer le manutentionnaire du résultat de l'identification effectuée par lesdits moyens de comparaison.

Avantageusement, ce module électronique comporte en outre des moyens d'émission/réception à courte distance de type infrarouge pour recevoir d'un ensemble informatique distant lesdites références relatives aux objets à identifier.

### Brève description des dessins

Les caractéristiques et avantages de la présente invention ressortiront mieux de la description suivante, faite à titre indicatif et non limitatif, en regard des dessins annexés sur lesquels :
- la figure 1 illustre typiquement une aire d'entreposage de colis,
- la figure 2 montre un premier exemple de réalisation d'un vêtement interrogateur selon l'invention, et
- la figure 3 montre un second exemple de réalisation d'un vêtement interrogateur selon l'invention.

### Description détaillée d'un mode de réalisation préférentiel

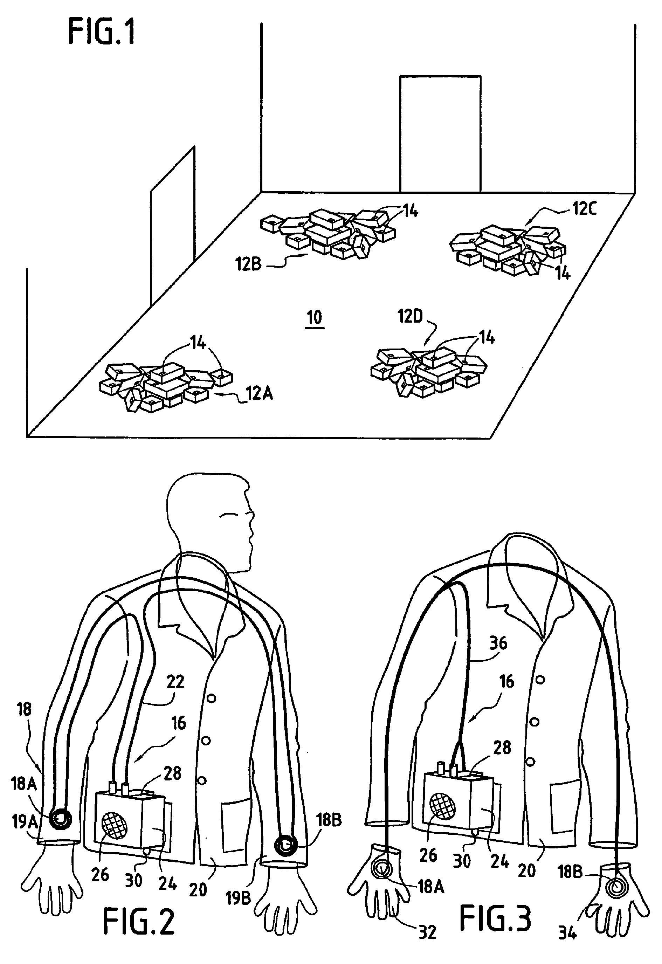

Une aire d'entreposage de colis est illustrée à la figure 1. On peut noter que dans cette aire d'entreposage 10, qui peut, par exemple, être un atelier d'une société de transport de colis expresses, les colis sont disposés en vrac, le plus souvent par monticules 12A-12D, chaque monticule pouvant notamment résulter du déchargement d'un ou plusieurs véhicules de même provenance.

Actuellement, pour effectuer une identification RFID, tous les colis sont munis chacun dès leur fermeture d'une étiquette radio-fréquence (RFID tag 14) qui est noyée dans (apposée sur ou portée par) une paroi du colis et qui va servir à son identification tant au niveau du transporteur (pour en déterminer le destinataire) qu'au niveau de l'utilisateur final (pour déterminer le contenu de ce colis).

Ces étiquettes miniaturisées appelées aussi transpondeurs comportent classiquement des moyens pour recevoir un premier signal radio et renvoyer en retour un second signal radio différent et porteur d'informations d'identification pertinentes pour l'application considérée et relatives, en l'espèce, au contenu et/ou la destination des colis. Ces moyens sont constitués d'une bobine/antenne pour l'émission/réception des signaux radio et d'une puce électronique pour le traitement (codage et décodage notamment) des informations d'identification contenues dans ces signaux radio. La puce électronique intègre une mémoire qui peut être du type à lecture seule, à lecture/écriture unique ou encore à lecture/écritures multiples. La fréquence d'utilisation du transpondeur peut être choisie, selon les réglementations en vigueur, de préférence dans la gamme des basses fréquences (9kHz à 135 kHz) mais aussi dans celle des hautes fréquences (13,56 MHz).

Selon l'invention, et comme l'illustre le premier exemple de réalisation de la figure 2, l'interrogateur 16 comporte des moyens d'émission/réception formés d'une antenne 18 spécialement adaptée aux émissions RFID et comportant par exemple deux bobinages à plat 18A, 18B directement intégrés dans les parties d'extrémité opposées, ou manchettes internes 19A et 19B, des deux manches d'un vêtement 20 destiné à être porté par un manutentionnaire. Ces bobinages peuvent être collés ou mieux tissés directement avec le vêtement comme l'enseigne par exemple le brevet US 5 896 087. Les deux bobinages de cette antenne radio-fréquence sont classiquement couplés via des câbles de liaison 22 à un module électronique auto-alimenté 24 comportant, comme il est connu, une source radio-fréquence et des composants électroniques (alimentation (batterie rechargeable de préférence), modulateur, détecteur, convertisseur, unité de traitement) nécessaires à l'alimentation à distance des transpondeurs et au traitement des informations d'identification reçues par chaque élément d'antenne et échangées entre le module électronique et les transpondeurs. Ce module électronique comporte en outre selon l'invention des moyens de discrimination pour déterminer une information d'identification pertinente parmi plusieurs informations d'identification obtenues des transpondeurs par chacun des deux bobinages de l'antenne radio-fréquence.

Le module électronique, qui peut par exemple être porté à la ceinture, comporte de même classiquement, au niveau de son unité de traitement, des moyens de comparaison pour comparer les informations d'identification obtenues des transpondeurs avec des références relatives aux colis recherchés préalablement emmagasinées dans des moyens mémoire de cette unité de traitement destinés à stocker ces références, et ainsi valider les objets collectés au fur et à mesure de leur identification sur l'aire d'entreposage.

Des moyens d'indication visuelle et/ou sonore 26 sont bien entendu intégrés dans le module électronique pour informer le manutentionnaire du résultat de l'identification, ce module électronique 24 pouvant comporter en outre un écran 28 sur lequel le manutentionnaire peut visualiser les différents paramètres de sa recherche qui auront été préalablement enregistrés dans l'interrogateur à partir d'une interface de liaison à courte distance 30, avantageusement de type infrarouge (Firewire par exemple), avec un ordinateur de gestion (non représenté).

Dans un mode de réalisation particulier, le module électronique 24 peut se présenter sous la forme d'un dispositif électronique universel de type organiseur, assistant personnel ou tablette graphique, convenablement programmé pour assurer une fonction de traitement d'information RFID.

Un second mode de réalisation de l'invention permettant une plus grande sélectivité (du fait d'un contact possible plus proche et donc meilleur avec l'objet à retrouver) est illustré à la figure 3. Dans ce mode de réalisation, l'antenne à double bobinage 18 n'est plus incorporée dans un vêtement de travail mais dans deux gants 32, 34 pouvant être enfilés par le manutentionnaire. Plus précisément, lorsque l'antenne est constituée de deux bobinages à plats, ceux-ci sont avantageusement tissés chacun sur la paume de ces deux gants. La liaison entre l'antenne et le module électronique 24 de l'interrogateur est effectuée par les câbles de liaison 22 montés dans une gaine 36 qui est avantageusement passée sous les vêtements du manutentionnaire.

Le fonctionnement du système selon l'invention est le suivant. La liste des colis à retrouver ayant été chargée préalablement dans le module électronique 24 à partir de l'ordinateur de gestion (par l'intermédiaire de sa liaison infrarouge 30 qui assure le transfert automatique de la liste des colis à retrouver dans la mémoire interne du module électronique), le manutentionnaire peut alors parcourir l'aire d'entreposage 10 à la recherche du ou des colis à retrouver. Il va se diriger vers les différents amoncellement de colis et dans chacun d'eux va toucher (de préférence par simple apposition des mains) et si nécessaire déplacer certains de ces colis jusqu'à trouver le colis ou un des colis recherchés. La présence des bobinages 18A, 18B sur chacune de ces mains ou ces avant bras assure une grande directivité et une très grande sélectivité à l'interrogateur de l'invention qui ne validera alors le colis repéré que si les signaux délivrés par les deux éléments d'antenne ont permis chacun une détection semblable du colis recherché (dont les références peuvent par exemple s'afficher au niveau du module électronique).

En outre, l'utilisation de l'interrogateur selon l'invention laisse les mains du manutentionnaire libre pour une meilleure prise des colis. La mise en place de l'interrogateur est de plus très simple, le manutentionnaire n'ayant qu'une blouse ou des gants à enfiler et un module électronique à porter.

## Revendications

1. Procédé pour l'identification d'objets munis chacun d'un transpondeur (14) par un dispositif interrogateur comportant des moyens d'interrogation radio-fréquence (18, 22, 24) pour obtenir une information d'identification sur chacun des objets, lesdits moyens d'interrogation radio-fréquence comportant une antenne radio-fréquence (18) couplée à un module électronique (24) de traitement des informations d'identification issues des transpondeurs, ladite antenne radio-fréquence étant formée de deux bobinages à plat (18A, 18B) incorporés sur deux extrémités opposées (19A, 19B ; 32, 34) d'un vêtement (20) porté par un manutentionnaire chargé de collecter lesdits objets disposés en vrac sur une aire d'entreposage (10), et reliés audit module électronique porté par le manutentionnaire par des câbles de liaison (22) incorporés dans le vêtement, ledit module électronique comportant des moyens de discrimination pour déterminer une information d'identification pertinente parmi plusieurs informations d'identification obtenues des transpondeurs au travers de ladite antenne radio-fréquence, procédé **caractérisé en ce que** l'identification d'un objet recherché est validé lorsque les signaux délivrés par les éléments d'antenne formés par lesdits deux bobinages à plats permettent une détection semblable.

2. Procédé selon la revendication 1, **caractérisé en ce que** lesdits deux bobinages à plat (18A, 18B) sont tissés sur les manchettes (19A, 19B) du vêtement (20).

3. Procédé selon la revendication 1, **caractérisé en ce que** lesdits deux bobinages à plat (18A, 18B) sont tissés sur deux gants (32, 34) enfilés par le manutentionnaire, les câbles de liaison au module électronique étant disposés dans une gaine (36) passée sous le vêtement (20) du manutentionnaire.

4. Procédé selon la revendication 1, **caractérisé en ce que** ledit module électronique comporte des moyens de comparaison pour comparer les informations d'identification obtenues des transpondeurs avec des références relatives aux objets à identifier et ainsi valider au fur et à mesure de leur collecte les objets relevés par le manutentionnaire.

5. Procédé selon la revendication 4, **caractérisé en ce que** ledit module électronique comporte des moyens mémoire pour stocker lesdites références relatives aux objets à identifier.

6. Procédé selon la revendication 4, **caractérisé en ce qu'**il est prévu en outre des moyens d'indication visuelle et/ou sonore (26) pour informer le manutentionnaire du résultat de l'identification effectuée par lesdits moyens de comparaison.

7. Procédé selon la revendication 4, **caractérisé en ce que** ledit module électronique comporte en outre des moyens d'émission/réception à courte distance (30) pour recevoir d'un ensemble informatique distant lesdites références relatives aux objets à identifier.

8. Procédé selon la revendication 7, **caractérisé en ce que** lesdits moyens d'émission/réception à courte distance sont de type infrarouge.

9. Vêtement-antenne pour l'identification d'objets munis chacun d'un transpondeur (14), comportant une antenne radio-fréquence (18) formée de deux bobinages à plats (18A, 18B) incorporés chacun sur les deux manchettes (19A, 19B) du vêtement (20) porté par un manutentionnaire chargé de collecter les objets disposés en vrac sur une aire d'entreposage (10), et destinés à être reliés par des câbles de liaison (22) incorporés dans le vêtement à un module électronique (22) de traitement des informations d'identification issues des transpondeurs porté par le manutentionnaire, ledit module électronique comportant des moyens de discrimination pour déterminer une information d'identification pertinente parmi plusieurs informations d'identification obtenues des transpondeurs au travers de l'antenne radio-fréquence, et des moyens pour valider cette information d'identification lorsque les signaux délivrés par les éléments d'antenne formés par lesdits deux bobinages à plats permettent une détection semblable.

## Claims

1. Method for identifying articles each provided with a transponder, by an interrogator device comprising radio-frequency (RF) interrogation means for obtaining identifying information on each of the articles, said RF interrogation means comprising an RF antenna coupled to an electronic module for processing the identifying information issuing from the transponders, wherein said RF antenna formed by two flat coils incorporated on two opposite ends of a garment worn by an agent in charge of collecting said articles arranged loose over a storage area, and connected to said electronic module worn by the agent by communication lines incorporated in the garment, said electronic module comprising discrimination means for determining pertinent identifying information from the plurality of identifying information obtained from the transponders through said RF antenna, method **characterized in that** the identification of a searched article is validated when the signals delivered by the antenna elements formed by the two flat coils allow an identical detection.

2. The method of Claim 1, wherein said two flat coils are woven on the cuffs of the garment.

3. The method of Claim 1, wherein said two flat coils are woven on two gloves worn by the agent, the leads linking to the electronic module being disposed in a sheath passed underneath the agent's garment.

4. The method of Claim 1, wherein the electronic module comprises comparison means for comparing the identifying information obtained from the transponders with references relative to the articles to be identified, and thus validating, as they are being collected, the articles read by the agent.

5. The device of Claim 4, wherein said electronic module comprises memory means for storing said references relative to the articles to be identified.

6. The method of Claim 4, wherein it further comprises visual and/or audible indication means for informing the agent of the result of the identification made by said comparison means.

7. The method of Claim 4, wherein said electronic module further comprises short range emission/reception means for receiving said references relative to the articles to be identified, from a remote data-processing assembly.

8. The method of Claim 7, wherein said short range emission/reception means are of infrared type.

9. Garment incorporating antenna for identifying articles each provided with a transponder, comprising an RF antenna formed by two flat coils each incorporated on the two cuffs of the garment worn by an agent in charge of collecting the articles arranged loose over a storage area, and intended to be connected by communication lines incorporated in the garment to an electronic module for processing the identifying information issuing from the transponders carried by the agent, said electronic module comprising discrimination means for determining pertinent identifying information from a plurality of identifying information obtained from the transponders through said RF antenna, and means for validating said identifying information when the signals delivered by the antenna elements formed by the two flat coils allow an identical detection.

## Patentansprüche

1. Verfahren zur Identifikation von jeweils mit einem Transponder (14) versehenen Gegenständen mittels einer Abfrageeinrichtung, die Radiofrequenzabfragemittel (18, 22, 24) umfaßt, um eine Identifikationsinformation über einen jeden der Gegenstände zu erhalten, wobei die Radiofrequenzabfragemittel eine Radiofrequenzantenne (18) umfassen, die mit einem elektronischen Modul (24) zur Verarbeitung der Identifikationsinformationen aus den Transpondern gekoppelt ist, wobei die Radiofrequenzantenne von zwei Flachspulen (18A, 18B) gebildet ist, die an zwei gegenüberliegenden Enden (19A, 19B; 32, 34) eines Kleidungsstücks (20) integriert sind, das von einem mit der Entnahme der auf einer Lagerfläche (10) lose angeordneten Gegenstände beauftragen Lagerarbeiter getragen wird, und die mit dem von dem Lagerarbeiter getragenen elektronischen Modul über in das Kleidungsstück integrierte Verbindungskabel (22) verbunden sind, wobei das elektronische Modul Unterscheidungsmittel umfaßt, um eine relevante Identifikationsinformation unter mehreren Identifikationsinformationen, die über die Radiofrequenzantenne von den Transpondern erhalten werden, zu bestimmen, Verfahren, das **dadurch gekennzeichnet ist, daß** die Identifikation eines gesuchten Gegenstandes dann für gültig erklärt wird, wenn die Signale, die über die von den beiden Flachspulen gebildeten Antennenelemente geliefert werden, eine gleiche Erkennung ermöglichen.

2. Verfahren nach Anspruch 1, **dadurch gekennzeichnet, daß** die beiden Flachspulen (18A, 18B) an den Manschetten (19A, 19B) des Kleidungsstücks (20) eingewebt sind.

3. Verfahren nach Anspruch 1, **dadurch gekennzeichnet, daß** die beiden Flachspulen (18A, 18B) an zwei von dem Lagerarbeiter übergestreiften Handschuhen (32, 34) eingewebt sind, wobei die Kabel zur Verbindung mit dem elektronischen Modul in einer unter dem Kleidungsstück (20) des Lagerarbeiters geführten Schutzhülle (36) angeordnet sind.

4. Verfahren nach Anspruch 1, **dadurch gekennzeichnet, daß** das elektronische Modul Vergleichsmittel umfaßt, um die von den Transpondern erhaltenen Identifikationsinformationen mit Angaben zu den zu identifizierenden Gegenständen zu vergleichen und um so, im Laufe ihrer Entnahme, die durch den Lagerarbeiter aufgenommenen Gegenstände für gültig zu erklären.

5. Verfahren nach Anspruch 4, **dadurch gekennzeichnet, daß** das elektronische Modul Speichermittel aufweist, um die Angaben zu den zu identifizierenden Gegenständen zu speichern.

6. Verfahren nach Anspruch 4, **dadurch gekennzeichnet, daß** ferner Mittel zur optischen und/oder akustischen Anzeige (26) vorgesehen sind, um den Lagerarbeiter über das Ergebnis der durch die Vergleichsmittel durchgeführten Identifikation zu informieren.

7. Verfahren nach Anspruch 4, **dadurch gekennzeichnet, daß** das elektronische Modul ferner Kurzstrecken-Sende-Empfangsmittel (30) umfaßt, um von einer entfernten Datenverarbeitungseinheit die Angaben zu den zu identifizierenden Gegenständen zu empfangen.

8. Verfahren nach Anspruch 7, **dadurch gekennzeichnet, daß** die Kurzstrecken-Sende-Empfangsmittel vom Typ Infrarot sind.

9. Kleidungsstück mit Antenne für die Identifikation von jeweils mit einem Transponder (14) versehenen Gegenständen, umfassend eine Radiofrequenzantenne (18), die von zwei Flachspulen (18A, 18B) gebildet ist, die jeweils an den beiden Manschetten (19A, 19B) des Kleidungsstücks (20) integriert sind, das von einem mit der Entnahme der auf einer Lagerfläche (10) lose angeordneten Gegenstände beauftragen Lagerarbeiter getragen wird, und die dazu bestimmt sind, über in das Kleidungsstück integrierte Verbindungskabel (22) mit einem von dem Lagerarbeiter getragenen elektronischen Modul (24) zur Verarbeitung der Identifikationsinformationen aus den Transpondern verbunden zu werden, wobei das elektronische Modul Unterscheidungsmittel umfaßt, um eine relevante Identifikationsinformation unter mehreren Identifikationsinformationen, die über die Radiofrequenzantenne von den Transpondern erhalten werden, zu bestimmen, sowie Mittel, um diese Identifikationsinformation dann für gültig zu erklären, wenn die Signale, die über die von den beiden Flachspulen gebildeten Antennenelemente geliefert werden, eine gleiche Erkennung ermöglichen.
